Europäisches Patentamt

European Patent Office

Office européen des brevets

(19)

(11) Numéro de publication : **0 356 280 B1**

(12) ## FASCICULE DE BREVET EUROPEEN

(45) Date de publication du fascicule du brevet :
**11.03.92 Bulletin 92/11**

(51) Int. Cl.$^5$ : **B64D 33/02, F02C 7/042**

(21) Numéro de dépôt : **89402145.0**

(22) Date de dépôt : **28.07.89**

(54) **Entrée d'air supersonique et hypersonique bidimensionnelle et symétrique pour l'air de combustion d'un moteur d'aéronef.**

(30) Priorité : **04.08.88 FR 8810558**

(43) Date de publication de la demande :
**28.02.90 Bulletin 90/09**

(45) Mention de la délivrance du brevet :
**11.03.92 Bulletin 92/11**

(84) Etats contractants désignés :
**DE GB IT SE**

(56) Documents cités :
**FR-A- 1 071 234**
**US-A- 2 877 965**

(73) Titulaire : **OFFICE NATIONAL D'ETUDES ET DE RECHERCHES AEROSPATIALES(O.N.E.R.A.)**
**29, avenue de la Division Leclerc**
**F-92322 Châtillon Cédex (FR)**

(72) Inventeur : **Falempin, François**
**Résidence du Parc de Lormoy Bât. Flandre 2**
**F-91240 Saint Michel Sur Orge (FR)**

(74) Mandataire : **Jacquelin, Marc-Henri et al**
**Cabinet PLASSERAUD 84, rue d'Amsterdam**
**F-75009 Paris (FR)**

Jouve, 18, rue Saint-Denis, 75001 PARIS

## Description

L'invention est relative à une entrée d'air supersonique et hypersonique pour l'air de combustion d'un moteur d'aéronef, cette entrée d'air étant du type bidimensionnelle et symétrique, c'est-à-dire que le caractère symétrique de cette entrée d'air résulte du fait qu'elle comporte deux volets avant formant visière disposés symétriquement de part et d'autre d'un plan longitudinal.

Une entrée d'air doit pouvoir présenter de bonnes performances (en efficacité et en débit) dans un grand domaine de vol pour pouvoir être appliquée à de nombreux aéronefs : c'est ainsi que l'entrée d'air doit être adaptée au nombre de Mach et à l'altitude de vol, deux paramètres qui sont directement liés.

En effet, les vols à basse altitude ne peuvent être envisagés qu'à des nombres de Mach modérés (jusqu'à 3), pour des raisons de tenue thermique, alors qu'en haute altitude (20 000 à 30 000 mètres) le nombre de Mach doit être nettement supérieur pour permettre, compte tenu de la raréfaction de l'air, le maintien d'une pression dynamique suffisante pour assurer la sustentation de l'aéronef.

De ce fait, pour obtenir une forte poussée sur toute la trajectoire de l'aéronef, tant à basse qu'à haute altitude, il est nécessaire de fournir au moteur un débit très variable d'air de combustion avec un taux de récupération de pression génératrice suffisant à tous les nombres de Mach.

L'entrée d'air doit donc pouvoir présenter une section d'entrée qui peut augmenter dans des proportions importantes avec l'augmentation du nombre de Mach, et plus particulièrement avec une augmentation rapide du nombre de Mach (réaccélération rapide de l'aéronef après manoeuvre) : cette augmentation du nombre de Mach doit pouvoir s'étendre jusqu'à Mach 6 ou 7 environ.

On a donc proposé des entrées d'air à géométrie variable.

L'art antérieur en matière d'entrée d'air à géométrie variable est constitué par les solutions connues pour la réalisation d'aéronefs évoluant à des vitesses inférieures à Mach 4 à 4,5 pour des raisons de traînée trop importante au-delà des susdites vitesses limites. Il correspond aux réalisations mises en oeuvre sur l'avion CONCORDE (rampes de compression et de diffusion mobiles définissant entre elles un piège à couche limite interne), sur les avions AVIONS MARCEL DASSAULT/BREGUET AVIATION "MIRAGE"(corps mobile --dit souris-- le long de la paroi de la carène), sur les avions Mc DONNELL DOUGLAS F15 (élément avant comportant un volet solidaire de parois latérales formant un ensemble basculant autour d'un axe voisin du bord d'attaque de la carène).

On connaît également le brevet US 2 877 965 qui décrit une entrée d'air bidimensionnelle supersonique et hypersonique pour l'air de combustion d'un moteur d'aéronef, cette entrée d'air comportant deux volets avant formant visière, disposés symétriquement de part et d'autre d'un plan longitudinal, chaque volet avant étant mobile autour d'un axe de pivotement situé au voisinage de la paroi de l'entrée d'air qui prolonge le volet avant considéré, l'axe de pivotement de chaque volet avant étant situé au voisinage d'un premier piège à couche limite disposé dans la paroi de l'entrée d'air qui prolonge ledit volet avant.

Cependant ce brevet US 2 877 965 n'enseigne pas les moyens à mettre en oeuvre pour réaliser des vols à des nombres de Mach de 6 ou 7. Le domaine de vol de l'entrée d'air indiqué dans ce brevet US 2 877 965 couvre du subsonique au supersonique modéré. Dans le système à simple volet décrit dans ce brevet US 2 877 965, le domaine de vol du supersonique élevé (Match 6 ou 7) est interdit par des phénomènes de décollement de couche limite.

Le but de la présente invention consiste en une entrée d'air à géométrie variable capable de fournir des débits volumiques très importants à des nombres de Match élevés pouvant atteindre Match 6 ou 7.

Selon une première disposition de l'invention, l'entrée d'air comporte deux volets avant formant visières, disposés symétriquement de part et d'autre d'un plan longitudinal, chaque volet avant étant mobile autour d'un axe de pivotement situé au voisinage de la paroi de l'entrée d'air qui prolonge le volet avant considéré, l'axe de pivotement de chaque volet avant étant situé au voisinage d'un premier piège à couche limite disposé dans la paroi de l'entrée d'air qui prolonge ledit volet avant, et elle est caractérisée par le fait que chaque volet avant comporte un volet arrière mobile relié au volet avant, de sorte que ce volet arrière mobile soit situé en aval du premier piège à couche limite, l'extrémité arrière de ce volet arrière mobile coopérant avec l'extrémité avant d'un élément de paroi interne mobile pour définir un second piège à couche limite dont la position dans le canal de l'entrée d'air peut varier en fonction du nombre de Mach.

Selon une seconde disposition de l'invention, l'entrée d'air comporte deux volets avant formant visière, disposés symétriquement de part et d'autre d'un plan longitudinal, chaque volet avant étant mobile autour d'un axe de pivotement situé au voisinage de la paroi de l'entrée d'air qui prolonge le volet avant considéré, l'axe de pivotement de chaque volet avant étant situé au voisinage d'un premier piège à couche limite disposé dans la paroi de l'entrée d'air qui prolonge ledit volet avant, caractérisée par le fait que la partie arrière de la paroi interne du volet avant est formée de deux éléments de paroi articulés, le premier sur le volet avant et le second sur le premier, l'extrémité arrière de ce second élément de paroi coopérant avec l'extrémité avant d'un élément de paroi interne mobile pour définir le susdit premier piège à couche limite dont la position dans le canal de l'entrée d'air peut varier en fonction du nombre de Mach.

Grâce à l'une ou l'autre de ces deux dispositions, il est possible d'éviter les phénomènes de décollement de couche limite et, de ce fait, de disposer d'une entrée d'air à géométrie variable capable de fournir des débits volumiques très importants à des nombres de Mach très élevés pouvant atteindre Mach 6 ou 7.

Les chocs prenant naissance sur la rampe de compression, constituée par la paroi interne de chaque volet mobile, convergent sur le plan de symétrie de l'entrée d'air. Les chocs réfléchis sur le plan de symétrie interceptent les parois au niveau des pièges à couche limite internes. Il n'y a pas d'interaction onde de compression-couche limite en l'absence de toute paroi matérielle entre les deux volets mobiles.

On obtient donc un bon niveau d'efficacité tout en réalisant un gain de traînée important, surtout lorsque l'entrée d'air fournit un débit volumique correspondant à des nombres de Mach de l'ordre de 6 ou 7 pour lesquels l'ouverture est maximale.

L'invention consiste, mises à part les dispositions dont il vient d'être question, en certaines autres dispositions qui s'utilisent de préférence en même temps et dont il sera plus explicitement question ci-après.

L'invention pourra, de toute façon, être bien comprise à l'aide du complément de description qui suit, ainsi que des dessins ci-annexés, lesquels complément et dessins sont relatifs à des modes de réalisation préférés de l'invention et ne comportent, bien entendu, aucun caractère limitatif.

Les figures 1 et 2 de ces dessins sont deux schémas de face d'un aéronef équipé d'entrées d'air conformes à l'invention.

Les figures 3 et 4 montrent, dans deux positions différentes, une entrée d'air établie conformément à un premier mode de réalisation de l'invention.

Les figures 5, 6 et 7 montrent, dans trois positions différentes, une entrée d'air établie conformément à un deuxième mode de réalisation de l'invention.

Les figures 8 et 9 montrent, dans deux positions différentes, une entrée d'air établie conformément à un troisième mode de réalisation de l'invention.

Les figures 10 et 11 montrent le fonctionnement en régime critique d'une entrée d'air selon l'invention.

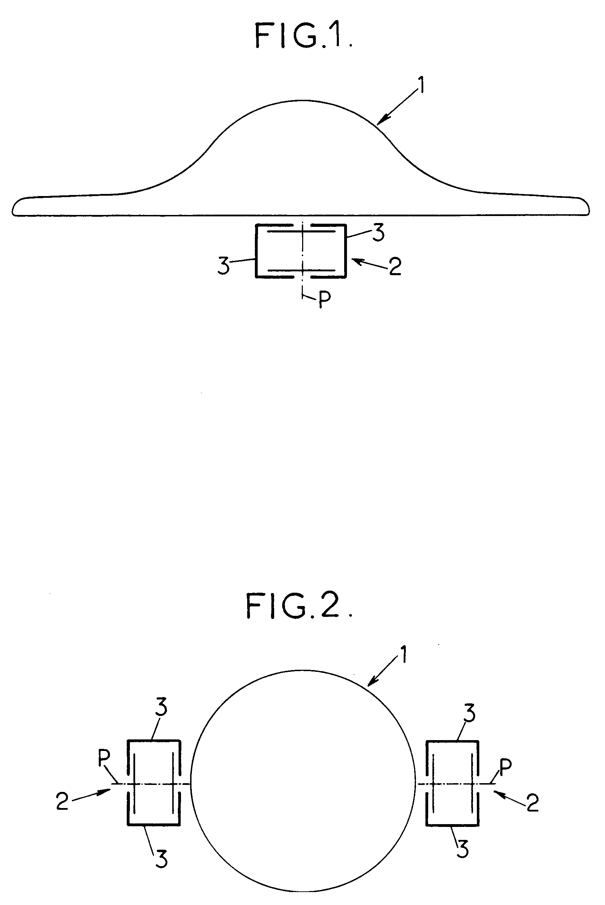

Sur les figures 1 et 2, on a schématisé en 1 la silhouette d'un aéronef vu de face et comportant

– une entrée d'air 2 située sous le fuselage (figure 1),

– deux entrées d'air 2 situées latéralement de chaque côté du fuselage (figure 2).

Chaque entrée d'air 2 alimente en air de combustion un moteur (non représenté) de l'aéronef 1.

L'entrée d'air de type bidimensionnel et symétrique comporte deux volets avant 3 formant visière disposés symétriquement de part et d'autre d'un plan longitudinal de symétrie P de l'entrée d'air.

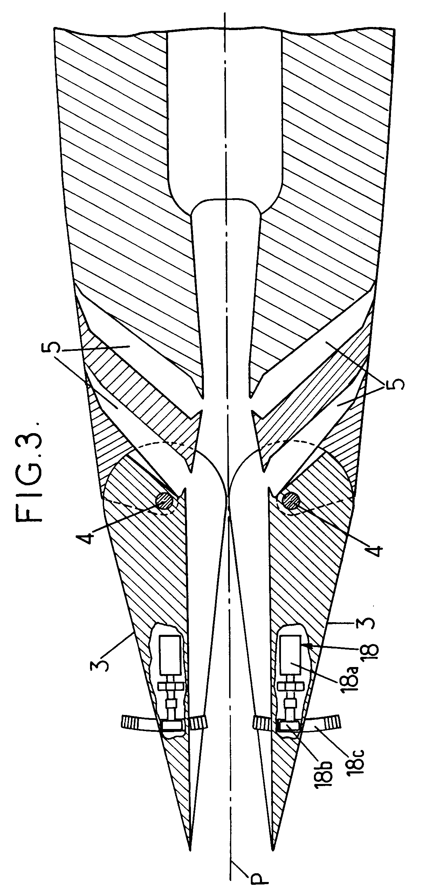

Comme montré sur les figures 3 à 9, qui sont des coupes longitudinales d'une entrée d'air conforme à l'invention, chaque volet avant 3 est mobile autour d'un axe de pivotement 4 situé au voisinage de la paroi de l'entrée d'air qui prolonge le volet avant 3 considéré.

Comme montré sur les figures 3 à 9, la disposition de l'axe de pivotement 4 du volet avant 3 est telle que ledit axe de pivotement est situé au voisinage d'un premier piège à couche limite 5 disposé dans la paroi de l'entrée d'air qui prolonge ledit volet avant.

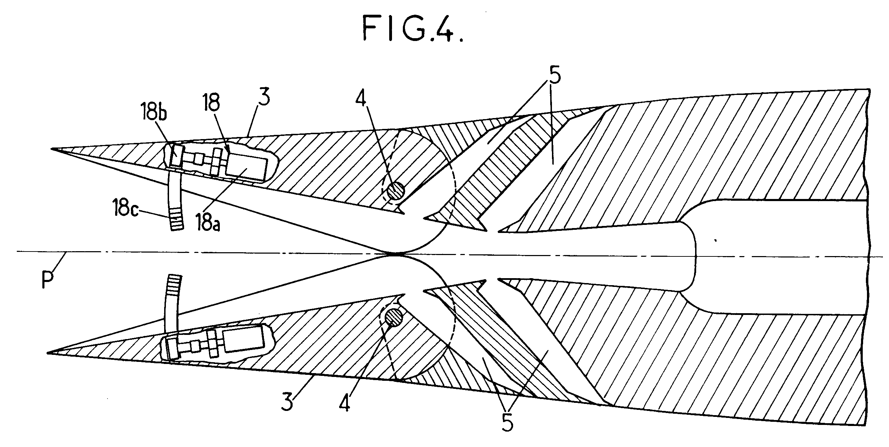

Selon la disposition constructive illustrée sur ces figures 3 et 4, ce premier piège à couche limite 5 est double, c'est-à-dire qu'il comprend deux pièges à couche limite disposés l'un derrière l'autre.

Sur la figure 3 on a représenté la configuration de l'entrée d'air pour un nombre de Mach égal à 2,1 et sur la figure 4 on a représenté la configuration de l'entrée d'air pour un nombre de Mach égal à 4,5.

Il est possible d'obtenir une configuration de l'entrée d'air pour laquelle les deux volets avant sont complètement fermés, cette configuration pouvant être intéressante avant la mise en fonctionnement du moteur de l'aéronef, en cas de panne en vol sur un aéronef multimoteurs ou lors d'une phase de rentrée atmosphérique non propulsée.

Il est aussi possible de réaliser une configuration dans laquelle les deux volets avant sont ouverts avec des angles différents par exemple pour corriger un dérapage.

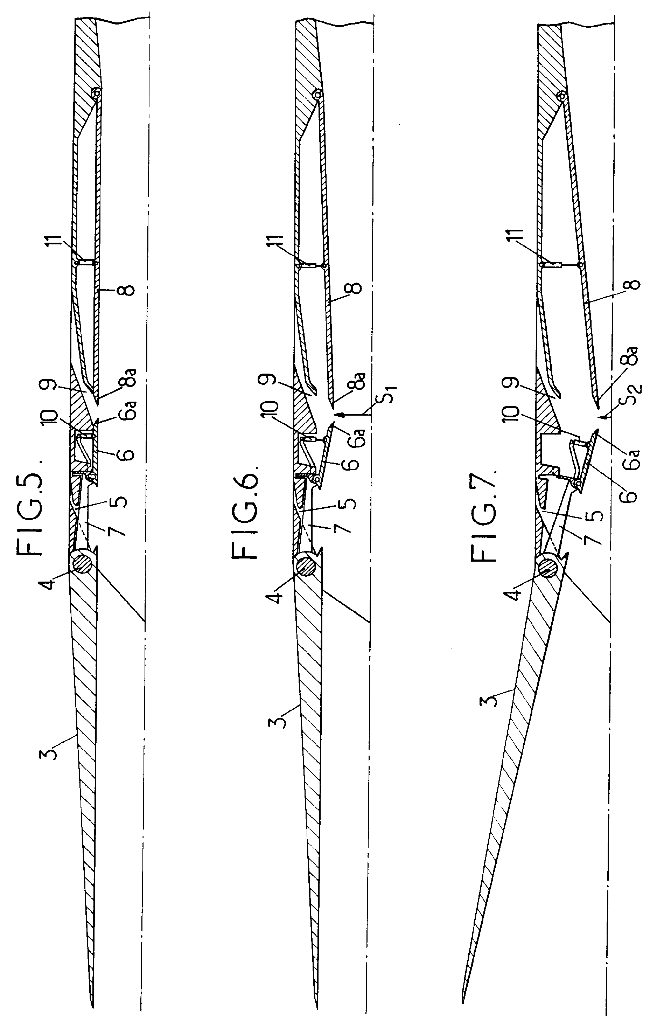

On peut aussi avoir recours au mode de réalisation illustré sur les figures 5, 6 et 7 et selon lequel le volet avant 3 comporte un volet arrière mobile 6 relié audit volet avant 3 par un ou plusieurs bras 7, de sorte que ce volet arrière mobile 6 soit situé en aval du premier piège à couche limite 5, l'extrémité arrière 6a de ce volet arrière mobile 6 coopérant avec l'extrémité avant 8a d'un élément de paroi interne mobile 8 pour définir un second piège à couche limite 9 dont la position dans le canal de l'entrée d'air peut varier en fonction du nombre de Mach.

La position de ce volet arrière mobile 6 est commandée par des moyens de commande 10.

La position de l'élément de paroi interne mobile 8 est commandée par des moyens de commande 11.

Sur la figure 5 on a représenté la configuration de l'entrée d'air pour un nombre de Mach inférieur à 1 :

– les deux volets avant 3 sont dans une position pour laquelle la section frontale de l'entrée d'air est minimale,

– de chaque côté, le volet arrière mobile 6 est en position rentrée ainsi que l'élément de paroi interne mobile 8 de manière à définir une paroi, prolongeant le volet avant 3, qui délimite un canal à section pratiquement constante.

Sur la figure 6 on a représenté la configuration de l'entrée d'air pour un nombre de Mach d'environ 2 :

– les deux volets avant 3 sont dans une position pour laquelle la section frontale de l'entrée d'air est toujours minimale,
– de chaque côté, le volet arrière mobile 6 est en position sortie, et l'élément de paroi interne mobile 8 est en position intermédiaire de manière à ce que ces deux parois forment un convergent-divergent définissant une section minimale $S_1$ au niveau de laquelle se trouve l'ouverture du second piège à couche limite 9.

Sur la figure 7 on a représenté la configuration de l'entrée d'air pour un nombre de Mach supérieur à 5 :
– les deux volets avant 3 sont dans une position pour laquelle la section frontale de l'entrée d'air est maximale,
– de chaque côté, le volet arrière mobile 6 est en position rentrée et se trouve dans le prolongement du volet avant 3, et l'élément de paroi interne mobile 8 est en position sortie de manière à ce que ces deux parois forment un convergent-divergent définissant une section minimale $S_2$ de section inférieure à la section minimale $S_1$ de la configuration précédente pour Mach 2 et au niveau de laquelle se trouve l'ouverture du second piège à couche limite 9.

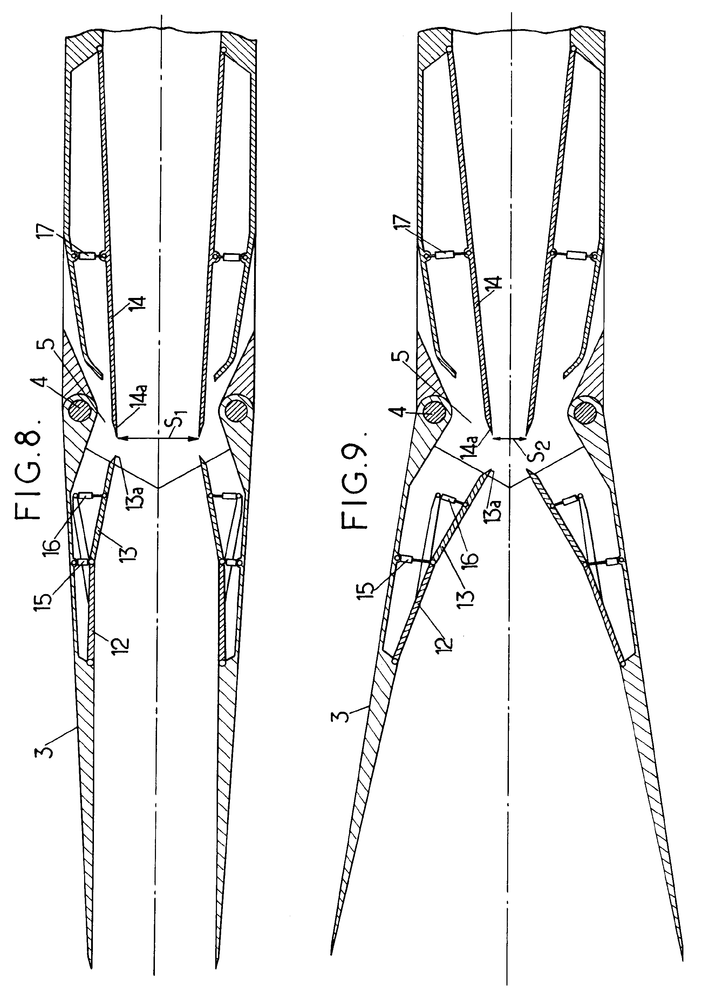

On peut également avoir recours au mode de réalisation illustré sur les figures 8 et 9, selon lesquelles la partie arrière de la paroi interne du volet avant 3 est formée de deux éléments de paroi articulés 12 et 13, à savoir
– le premier élément de paroi 12 articulé sur le volet avant 3,
– et le second élément de paroi 13 articulé sur le premier élément de paroi 12.

L'extrémité arrière 13a de ce second élément de paroi coopère avec l'extrémité avant 14a d'un élément de paroi interne mobile 14 pour définir le premier piège à couche limite 5.

La position du premier élément de paroi articulé 12 est commandée par des moyens de commande 15.

La position du second élément de paroi articulé 13 est commandée par des moyens de commande 16.

La position de l'élément de paroi interne mobile 14 est commandée par des moyens de commande 17.

Sur la figure 8, on a représenté la configuration de l'entrée d'air pour un nombre de Mach d'environ 2 :
– les deux volets avant 3 sont dans une position pour laquelle la section frontale de l'entrée d'air est minimale,
– de chaque côté, le premier élément de paroi 12 est en position rentrée,
– de chaque côté, le second élément de paroi 13 est en position sortie,
– de chaque côté, l'élément de paroi interne mobile 14 est en position intermédiaire.

Sur la figure 9, on a représenté la configuration de l'entrée d'air pour un nombre de Mach supérieur à 5 :

– les deux volets avant 3 sont dans une position pour laquelle la section frontale de l'entrée d'air est maximale,
– de chaque côté, le premier élément de paroi 12 est en position sortie,
– de chaque côté, le second élément de paroi 13 est en position sortie,
– de chaque côté, l'élément de paroi interne mobile 14 est en position sortie.

Selon la configuration illustrée sur la figure 8, l'entrée d'air forme un convergent-divergent définissant une section minimale $S_1$ au niveau de laquelle se trouve l'ouverture du premier piège à couche limite 5.

Selon la configuration illustrée sur la figure 9, l'entrée d'air forme un convergent-divergent définissant une section minimale $S_2$ de section inférieure à la section minimale $S_1$ de la configuration précédente pour Mach 2, et au niveau de laquelle se trouve l'ouverture du premier piège à couche limite 5.

Au plan constructif, et en ce qui concerne les moyens de commande permettant la manoeuvre des deux volets avant 3, il convient de signaler que lesdits moyens de commande, désignés d'une façon générale par les chiffres de référence 18, peuvent être constitués par un mécanisme comprenant un moteur électrique 18a et un engrenage 18b solidaires du volet avant 3, et une crémaillère 18c solidaire de l'aéronef.

Cependant, les autres moyens de commande 10 (pour le volet arrière mobile 6), 11 (pour l'élément de paroi interne mobile 8), 15 (pour le premier élément de paroi 12), 16 (pour le second élément de paroi 13), et 17 (pour l'élément de paroi interne mobile 14), peuvent avantageusement être constitués par des vérins pneumatiques.

De préférence, l'ensemble de ces moyens de commande 10, 11, 15, 16, 17 et 18 sont du type irréversible, c'est-à-dire qu'en l'absence de source d'énergie, les ensembles mobiles qu'ils commandent doivent être immobilisés dans la position atteinte lors de la coupure de l'alimentation en énergie.

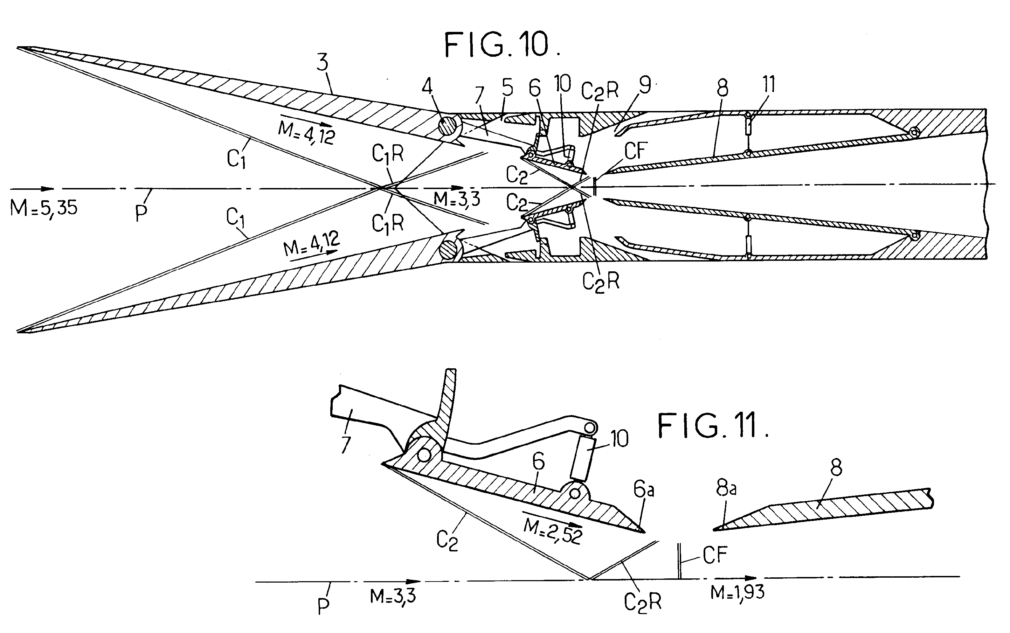

La figure 10 montre une entrée d'air conforme à celle de la figure 7, fonctionnant au Mach d'adaptation de 5,35, et la figure 11 un détail agrandi d'une zone particulière de cette entrée d'air.

Les chocs initiaux $C_1$ prenant naissance au bord d'attaque du volet avant 3 convergent sur le plan de symétrie P de l'entrée d'air. Les chocs réfléchis $C_1R$ sont absorbés par le premier piège à couche limite 5.

Les chocs $C_2$ prenant naissance au bord d'attaque du volet arrière mobile 6 convergent sur le plan de symétrie P de l'entrée d'air et leur réflexion $C_2R$ est absorbée par le second piège à couche limite 9. Ces figures indiquent aussi l'emplacement du choc droit final CF pour un fonctionnement de l'entrée d'air en régime critique.

## Revendications

1. Entrée d'air bidimensionnelle supersonique et hypersonique pour l'air de combustion d'un moteur d'aéronef, comportant deux volets avant (3) formant visière, disposés symétriquement de part et d'autre d'un plan longitudinal (P), chaque volet avant (3) étant mobile autour d'un axe de pivotement (4) situé au voisinage de la paroi de l'entrée d'air qui prolonge le volet avant considéré, l'axe de pivotement (4) de chaque volet avant (3) étant situé au voisinage d'un premier piège à couche limite (5) disposé dans la paroi de l'entrée d'air qui prolonge ledit volet avant (3), caractérisée par le fait que chaque volet avant (3) comporte un volet arrière mobile (6) relié au volet avant (3), de sorte que ce volet arrière mobile soit situé en aval du premier piège à couche limite (5), l'extrémité arrière (6a) de ce volet arrière mobile (6) coopérant avec l'extrémité avant (8a) d'un élément de paroi interne mobile (8) pour définir un second piège à couche limite (9) dont la position dans le canal de l'entrée d'air peut varier en fonction du nombre de Mach.

2. Entrée d'air bidimensionnelle supersonique et hypersonique pour l'air de combustion d'un moteur d'aéronef, comportant deux volets avant (3) formant visière, disposés symétriquement de part et d'autre d'un plan longitudinal (P), chaque volet avant (3) étant mobile autour d'un axe de pivotement (4) situé au voisinage de la paroi de l'entrée d'air qui prolonge le volet avant considéré, l'axe de pivotement (4) de chaque volet avant (3) étant situé au voisinage d'un premier piège à couche limite (5) disposé dans la paroi de l'entrée d'air qui prolonge ledit volet avant (3), caractérisée par le fait que la partie arrière de la paroi interne du volet avant (3) est formée de deux éléments de paroi (12,13) articulés, le premier (12) sur le volet avant (3) et le second (13) sur le premier (12), l'extrémité arrière (13a) de ce second élément de paroi (13) coopérant avec l'extrémité avant (14a) d'un élément de paroi interne mobile (14) pour définir le susdit premier piège à couche limite (5) dont la position dans le canal de l'entrée d'air peut varier en fonction du nombre de Mach.

## Patentansprüche

1. Zweidimensionaler Über- und Hyperschall-Lufteinlauf für Verbrennungsluft eines Luftfahrzeugtriebwerks, welcher zwei, eine Blende bildende, vordere Klappen (3) aufweist, die symmetrisch beidseitig einer Längsebene (P) angeordnet sind, wobei jede vordere Klappe (3) um eine Schwenkachse (4) beweglich ist, welche in der Nähe der Wand des Lufteinlaufes liegt, welche die jeweilige vordere Klappe verlängert, und wobei die Schwenkachse (4) jeder vorderen Klappe (3) in der Nähe einer ersten Grenzschichtfalle (5) liegt, welche in der Wand des Lufteinlaufes angeordnet ist, welche diese vordere Klappe (3) verlängert, dadurch **gekennzeichnet**, daß jede vordere Klappe (3) eine hintere, bewegliche Klappe (6) aufweist, welche mit der vorderen Klappe (3) derart verbunden ist, daß bei einer Lage der hinteren, beweglichen Klappe stromabwärts von der ersten Grenzschichtfalle (5) das hintere Ende (6a) dieser hinteren, beweglichen Klappe (6) mit dem vorderen Ende (8a) eines inneren, beweglichen Wandelements (8) zur Bildung einer zweiten Grenzschichtfalle (9) zusammenarbeitet, deren Lage im Lufteinlaufkanal sich in Abhängigkeit von der Machzahl ändern kann.

2. Zweidimensionaler Über- und Hyperschall-Lufteinlauf für Verbrennungsluft eines Luftfahrzeugtriebwerks, welcher zwei, eine Blende bildende, vordere Klappen (3) aufweist, die symmetrisch beidseitig einer Längsebene (P) angeordnet sind, wobei jede vordere Klappe (3) um eine Schwenkachse (4) beweglich ist, welche in der Nähe der Wand des Lufteinlaufes liegt, der die jeweilige vordere Klappe verlängert, und wobei die Schwenkachse (4) jeder vorderen Klappe (3) in der Nähe einer ersten Grenzschichtfalle (5) liegt, die in der Wand des Lufteinlaufes angeordnet ist, die die vordere Klappe (3) verlängert, dadurch **gekennzeichnet**, daß der hintere Teil der inneren Wand der vorderen Klappe (3) von zwei Gelenkwandelementen (12, 13) gebildet wird, das erste (12) an der vorderen Klappe (3) und das zweite (13) an dem ersten (12) und daß das hintere Ende (13a) des zweiten Wandelements (13) mit dem vorderen Ende (14a) eines inneren, beweglichen Wandelements (14) zur Bildung der ersten Grenzschichtfalle (5) zusammenarbeitet, deren Position im Kanal des Lufteinlaufes sich in Abhängigkeit von der Machzahl ändern kann.

## Claims

1. Two-dimensional, supersonic and hypersonic air intake for the combustion air of an aircraft engine, comprising two front flaps (3) forming a visor, disposed symmetrically on each side of a longitudinal plane (P), each front flap (3) being movable about a pivoting axis (4) located in the vicinity of the wall of the air intake which extends the front flap in question, the pivoting axis (4) of each front flap (3) being situated in the vicinity of a first boundary layer trap (5) disposed in the wall of the air intake which extends the said front flap (3), characterised in that each front flap (3) has a mobile rear flap (6) connected to the front flap (3) so that this mobile rear flap is situated downstream of the first boundary layer trap (5), the rear end (6a) of this mobile rear flap (6) cooperating with the front end (8a) of a mobile internal wall element (8) in order to define a second boundary layer trap (9) whose position in the passage of the air intake may vary as a function of the Mach number.

2. Two-dimensional, supersonic and hypersonic air intake for the combustion air of an aircraft engine, comprising two front flaps (3) forming a visor, disposed symmetrically on each side of a longitudinal plane (P), each front flap (3) being movable about a pivoting axis (4) situated in the vicinity of the wall of the air intake which extends the front flap in question, the pivoting axis (4) of each front flap (3) being situated in the vicinity of a first boundary layer trap (5) disposed in the wall of the air intake which extends the said front flap (3), characterised in that the rear part of the internal wall of the front flap (3) is formed of two articulated wall elements (12, 13), the first (12) on the front flap (3) and the second (13) on the first (12), the rear end (13a) of this second wall element (13) cooperating with the front end (14a) of a mobile internal wall element (14) in order to define the abovementioned first boundary layer trap (5) whose position in the passage of the air intake may vary as a function of the Mach number.

# FIG.1.

# FIG.2.

FIG.3.

EP 0 356 280 B1

# FIG.4.

EP 0 356 280 B1

FIG.5.

FIG.6.

FIG.7.

FIG.8.

FIG.9.

EP 0 356 280 B1

FIG. 10.

FIG. 11.

EP 0 356 280 B1